# DEMANDE DE BREVET EUROPEEN

(11) **EP 1 202 441 A1**
(43) Date de publication de la demande: **02.05.2002**
(21) Numéro de dépôt: 01410141.4
(22) Date de dépôt: 30.10.2001
(51) Int. Cl.: H02M 3/335

(54) **Alimentation à découpage basse tension isolée**

(30) Priorité: 31.10.2000 FR 0014015
(71) Demandeur: STMicroelectronics S.A., 92120 Montrouge (FR)
(72) Inventeur: Bailly, Alain, 13790 Rousset (FR)
(74) Mandataire: de Beaumont, Michel

(57) **Abrégé**

L'invention concerne un convertisseur de tension comprenant un circuit de commande (10') d'un interrupteur (6) de fourniture de courant à un enroulement primaire (5) d'un transformateur (4) à points de phase inversés, dont un enroulement secondaire (7) est associé à un condensateur (C2) de fourniture d'une tension continue de sortie régulée (Vout) et dont un enroulement auxiliaire (8) fournit une tension d'alimentation du circuit de commande, et des moyens (21) pour mesurer la valeur moyenne de la tension aux bornes de l'enroulement auxiliaire au voisinage de la fin de ses périodes de démagnétisation.

## Description

La présente invention concerne le domaine des convertisseurs de puissance du type alimentation à découpage basse tension. L'invention s'applique plus particulièrement aux alimentations isolées, c'est-à-dire ne disposant pas de point commun entre la tension d'entrée (par exemple, le réseau d'alimentation alternative) et la tension continue régulée de sortie. L'isolement est obtenu au moyen d'un transformateur dont un enroulement primaire est associé à un commutateur commandé en modulation de largeur d'impulsions, et dont un enroulement secondaire est associé à une diode et à un condensateur fournissant la tension de sortie.

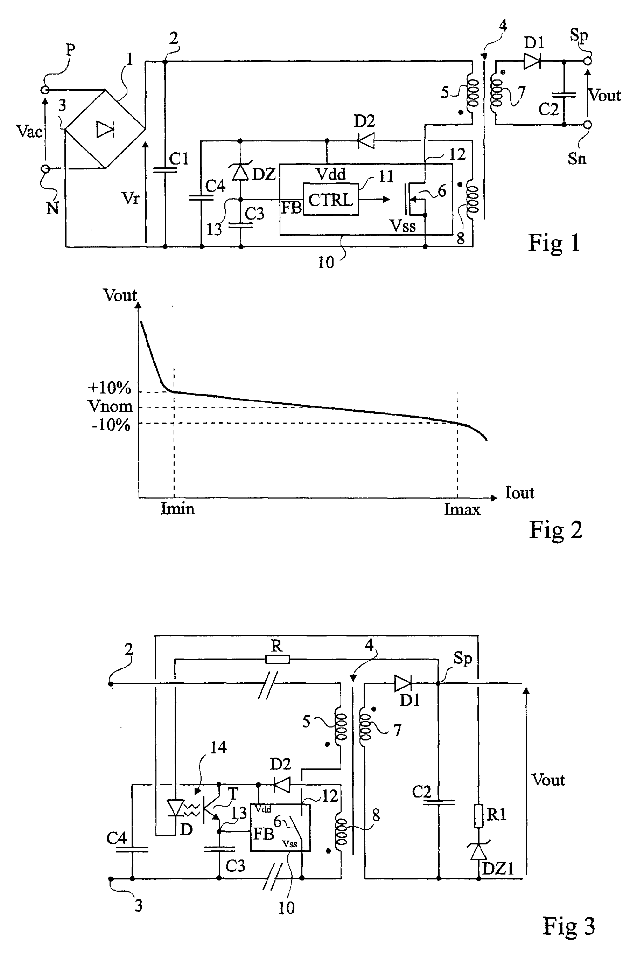

La figure 1 représente un exemple classique d'alimentation à découpage du type auquel s'applique la présente invention. Deux bornes P et N d'entrée reçoivent une tension alternative Vac, par exemple, la tension du secteur. Cette tension Vac fait l'objet d'un redressement, par exemple, un redressement double alternance au moyen d'un pont 1 de diodes. Les bornes d'entrée alternative du pont 1 sont reliées aux bornes P et N, et ses bornes 2 et 3 de sortie redressée fournissent une tension Vr. La tension Vr est généralement lissée au moyen d'un condensateur C1 connecté entre les bornes 2 et 3 qui constituent les bornes d'entrée de l'alimentation à découpage proprement dite.

Le convertisseur de la figure 1 constitue un convertisseur connu sous le nom "flyback" ou "à récupération d'énergie" dans lequel un transformateur 4 à points de phase inversés a son enroulement primaire 5 connecté en série avec un interrupteur 6 entre les bornes 2 et 3. Le point de phase de l'enroulement 5 est relié à une borne de l'interrupteur 6 dont l'autre borne est connectée à la borne 3. L'interrupteur 6 est commandé en mode à découpage à une fréquence élevée non audible (généralement supérieure à 20 kHz). Un enroulement secondaire 7 du transformateur 4 est associé à un condensateur C2 aux bornes Sp et Sn duquel est fournie la tension de sortie Vout continue. Le point de phase de l'enroulement 7 est connecté à la borne Sp par une diode D1, la cathode de la diode D1 étant connectée à la borne Sp. L'autre borne de l'enroulement 7 est reliée à la borne Sn.

Quand l'interrupteur 6 est fermé, le point de phase de l'enroulement 7 est à un potentiel négatif. La diode D1 est donc bloquée et un courant est accumulé dans l'enroulement primaire 5. A l'ouverture du commutateur 6, les points de phase des enroulements 5 et 7 deviennent tous deux positifs. La diode D1 est polarisée en direct. Le condensateur C2 est alors chargé avec l'énergie transférée à l'enroulement secondaire 7.

Le commutateur 6 (par exemple, un transistor MOS) est, dans l'exemple de la figure 1, intégré dans un circuit 10 avec son circuit électronique de commande. Un exemple d'un tel circuit intégré, commercialisé par la société STMicroelectronics, est connu sous la dénomination commerciale VIPER. Le circuit VIPER comporte une borne d'entrée Vdd destinée à recevoir une alimentation positive, une borne de référence de tension Vss reliée à la masse, et une borne FB recevant un signal d'erreur. Enfin, une borne 12 est reliée au drain du transistor à canal N intégré, dont la source est reliée à la borne Vss. La grille du transistor 6 est connectée en sortie d'un circuit 11 (CTRL). Le circuit 11 comprend un comparateur (non représenté) dont une première entrée reçoit une référence de tension interne et dont une deuxième entrée est connectée, en interne, à la borne d'alimentation positive. Un circuit VIPER est commandé en courant. L'asservissement, c'est-à-dire la modification de largeur d'impulsions de commande de l'interrupteur 6, s'effectue en faisant varier une boucle de compensation du circuit intégré 10 qui cherche lui-même à maintenir sa tension d'alimentation (Vdd-Vss).

Ainsi, dans une application à un convertisseur à découpage, la borne Vdd est connectée, par une diode D2, au point de phase d'un enroulement auxiliaire 8 du transformateur 4. L'anode de la diode D2 est reliée au point de phase de l'enroulement. L'autre borne de l'enroulement auxiliaire 8 est reliée à la borne 3 de référence de la tension redressée. L'enroulement auxiliaire 8 a pour rôle de fournir la tension d'alimentation du circuit 10. La borne FB est reliée au point milieu 13 d'une association en série d'une diode Zener DZ et d'un condensateur C3. Un condensateur C4 de filtrage de la tension d'alimentation locale est connecté entre la borne Vdd et la borne 3, cette dernière étant reliée à la borne Vss du circuit 10.

Dans le montage de la figure 1, la tension de sortie est fixée par la valeur de la diode Zener et le rapport de transformation entre les enroulements primaire 5 et secondaire 7. On utilise l'enroulement auxiliaire 8 qui donne une image de la tension de sortie, l'enroulement auxiliaire étant en phase directe avec l'enroulement secondaire 7. La tension dans cet enroulement 8 est donc proportionnelle à la tension dans l'enroulement secondaire 7.

Un inconvénient du convertisseur de la figure 1 est que la régulation de la tension de sortie Vout est peu précise. Cet inconvénient est illustré par la figure 2 qui représente la caractéristique de la tension de sortie Vout en fonction du courant Iout prélevé par la charge connectée aux bornes Sp et Sn du convertisseur. On peut considérer que, pour une tension nominale Vnom pour laquelle est dimensionné le convertisseur, on obtient une régulation à plus ou moins 10 % de cette tension nominale pour des courants compris entre deux valeurs respectivement minimale Imin et nominale Inom. Les courants Imin et Inom correspondent, en pratique, à respectivement 10 % et 100 % du courant maximal pour lequel est dimensionné le convertisseur.

Quand l'appel de courant de la charge alimentée par le convertisseur est inférieur à la valeur Imin, la tension Vout augmente fortement au fur et à mesure que le courant diminue. Ce phénomène est, entre autres, dû au fait que des parasites (pics de tension) présents au début de chaque cycle de démagnétisation de l'enroulement auxiliaire 8 ne sont plus négligeables par rapport à la période de démagnétisation qui est très courte. Ces pics influent alors fortement sur la valeur de la tension àux bornes de l'enroulement auxiliaire 8. Le condensateur C4 se charge alors à la valeur maximale de ces pics.

Entre les valeurs Imin et Inom, la tension Vout décroît légèrement (entre +10 et -10 % de la valeur nominale Vnom) au fur et à mesure que la période de démagnétisation augmente. Les pics parasites du début de chaque période de démagnétisation deviennent de plus en plus négligeables.

Quand le courant prélevé par la charge devient supérieur à la valeur Inom, la pente de décroissance de la tension Vout augmente fortement. Cela est dû au fait que le rapport cyclique utilisé par le convertisseur est maximal. Le niveau de tension de sortie ne peut alors plus être maintenu.

De plus en plus souvent, on utilise la plage des faibles courants (inférieurs à Imin) pour des questions d'économie d'énergie (par exemple, pendant des périodes de veille des circuits alimentés par le convertisseur).

Pour obtenir une régulation précise du niveau de tension de sortie Vout même à faible courant, il est classiquement nécessaire de prévoir une régulation de la tension au secondaire du transformateur.

La figure 3 représente un exemple de convertisseur mettant en oeuvre une telle solution classique. On retrouve un transformateur 4 dont les enroulements primaire 5 et secondaire 7 sont à points de phase inversés et dont un enroulement auxiliaire 8 fournit une tension d'alimentation à un circuit 10 de type VIPER. Le pont redresseur 1 et le condensateur C1 n'ont pas été représentés en figure 3 mais sont bien entendu présents. Par rapport au montage de la figure 1, la diode Zener DZ est remplacée par un phototransistor T d'un optocoupleur 14 dont la diode D véhicule un signal de mesure provenant du secondaire du transformateur 4. L'anode de la diode D est reliée, par une résistance R, à la borne Sp de sortie continue. La cathode de la diode D est reliée, par une résistance R1 en série avec une diode Zener DZ1, à la borne Sn, l'anode de la diode DZ1 étant reliée à la borne Sn. Lorsque la tension de sortie atteint la tension seuil de la diode DZ1 en série avec la tension directe aux bornes de la diode D de l'optocoupleur, un courant circule dans ces éléments, ainsi que dans l'optotransistor. Cette circulation de courant provoque une diminution de l'énergie envoyée au secondaire en réduisant le courant crête dans l'interrupteur 6. Le gain entre le courant sur la borne FB et ce courant crête est en effet négatif. Plus on augmente le courant sur la borne FB, moins on envoie d'énergie au secondaire.

D'autres montages utilisant une régulation à partir d'une mesure de la tension au secondaire sont connus. Tous ces montages ont en commun de recourir à un élément supplémentaire d'isolation galvanique pour transmettre la consigne de régulation entre le secondaire et le primaire. Dans le montage de la figure 3, il s'agit de l'optocoupleur 14.

La présente invention vise à pallier les inconvénients des convertisseurs connus à transformateur à points de phase inversés.

L'invention vise, en particulier, à permettre une régulation précise de la tension de sortie sans qu'il soit nécessaire de recourir à des moyens supplémentaires d'isolement galvanique entre le secondaire et le primaire du transformateur.

Pour atteindre ces objets, la présente invention prévoit un convertisseur de tension comprenant un circuit de commande d'un interrupteur de fourniture de courant à un enroulement primaire d'un transformateur à points de phase inversés, dont un enroulement secondaire est associé à un condensateur de fourniture d'une tension continue de sortie régulée et dont un enroulement auxiliaire fournit une tension d'alimentation du circuit de commande, caractérisé en ce qu'il comporte des moyens pour mesurer la valeur moyenne de la tension aux bornes de l'enroulement auxiliaire au voisinage de la fin de ses périodes de démagnétisation.

Selon un mode de réalisation de la présente invention, les moyens de mesure sont constitués d'un réseau résistif et capacitif formant un moyenneur dont la constante de temps est faible devant la période d'impulsions de commande de l'interrupteur.

Selon un mode de réalisation de la présente invention, lesdits moyens de mesure ne reçoivent la tension de l'enroulement auxiliaire que pendant les périodes de démagnétisation de l'enroulement secondaire.

Selon un mode de réalisation de la présente invention, le convertisseur comporte des moyens de détection des périodes de démagnétisation de l'enroulement auxiliaire.

Selon un mode de réalisation de la présente invention, lesdits moyens de détection comportent un premier circuit délivrant un signal à deux états de détection des fronts de la tension aux bornes de l'enroulement auxiliaire, et un deuxième circuit de définition d'une fenêtre de prise en compte du résultat de détection du premier circuit.

Selon un mode de réalisation de la présente invention, ladite fenêtre débute par l'ouverture dudit interrupteur et se termine par la première annulation qui suit de la tension aux bornes de l'enroulement auxiliaire.

Selon un mode de réalisation de la présente invention, la tension moyenne aux bornes de l'enroulement auxiliaire est utilisée pour asservir la largeur des impulsions de fermeture de l'interrupteur.

Selon un mode de réalisation de la présente invention, l'interrupteur et son circuit de commande sont intégrés dans un même circuit.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1 à 3 décrites précédemment sont destinées à exposer l'état de la technique et le problème posé ;
la figure 4 représente la caractéristique de la tension aux bornes d'un enroulement auxiliaire d'un convertisseur de puissance pour plusieurs valeurs de courant appelé par la charge alimentée par ce convertisseur ;
la figure 5 représente, partiellement et de façon très schématique sous forme de blocs, un mode de réalisation d'un convertisseur de puissance selon la présente invention ;
les figures 6A à 6E illustrent, sous forme de chronogrammes, le fonctionnement d'un convertisseur de puissance selon la présente invention ; et
la figure 7 est un schéma électrique détaillé d'un convertisseur de puissance selon la présente invention.

Les mêmes références désignent les mêmes éléments aux différentes figures. Les figures 2, 4 et 6A à 6E ne sont pas à l'échelle. Par souci de clarté, seuls les éléments du convertisseur qui sont nécessaires à la compréhension de l'invention ont été représentés aux figures et seront décrits par la suite. En particulier, la structure interne d'un circuit de commande intégré de type VIPER n'a pas été détaillée et est, de même que le fonctionnement d'un tel circuit, parfaitement connue.

La présente invention tire son origine d'une analyse du comportement de l'enroulement auxiliaire d'un transformateur d'isolement d'un convertisseur de puissance lors de variations du courant de sortie appelé par la charge connectée à l'enroulement secondaire. Pour une tension de sortie donnée, une variation du courant de sortie se traduit par un décalage temporel de l'instant de fin de démagnétisation de l'enroulement secondaire dans le condensateur de sortie, donc de l'instant de fin de démagnétisation de l'enroulement auxiliaire. De plus, l'inventeur a constaté que la tension en fin de démagnétisation est, pour une tension de sortie fixée, indépendante du courant de sortie.

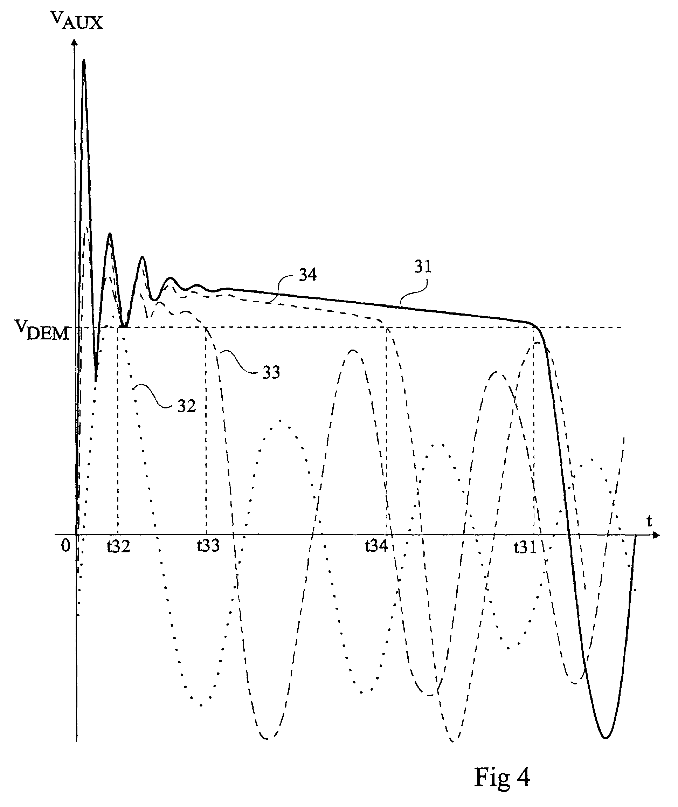

La figure 4 illustre ce phénomène et représente, pour une tension de sortie Vout maintenue à une valeur constante, l'allure de la tension V_{AUX} aux bornes de l'enroulement auxiliaire d'un convertisseur pour quatre valeurs de courant appelé par la charge. Une première courbe 31 en trait plein illustre le cas d'un fort appel de courant où la durée de démagnétisation est longue (jusqu'à un instant t31) et où, classiquement, les oscillations du début de démagnétisation amènent une erreur sur la tension filtrée par le condensateur C4 (figure 1 ou 3). Une deuxième courbe 32 en pointillés illustre le cas d'un faible appel de courant, où la durée de démagnétisation est très courte (jusqu'à un instant t32). La courbe 32 correspond à un appel de courant inférieur à la valeur minimale (Imin, figure 2). Deux courbes 33 et 34, respectivement en traits mixtes et en traits interrompus, représentent des cas intermédiaires. La courbe 33 correspond au cas limite où les oscillations ont juste le temps de s'amortir avant l'instant t33 de fin de démagnétisation. On peut considérer qu'il s'agit du cas où le courant appelé par la charge correspond au courant Imin. La courbe 34 illustre un autre cas (que la courbe 31) d'une durée de démagnétisation (jusqu'à un instant t34).

Les courbes de la figure 4 illustrent bien que les instants de fin de démagnétisation (où la tension V_{AUX} chute brusquement) t31, t32, t33, t34 interviennent tous à un même niveau V_{DEM} de tension dans l'enroulement auxiliaire. De plus, la valeur moyenne de la tension V_{AUX} pendant la démagnétisation est fonction du courant appelé par la charge, les enroulements secondaire et auxiliaire étant en relation de phase directe l'un avec l'autre.

On peut considérer qu'en mesurant la valeur moyenne de la tension V_{AUX} sur un faible intervalle avant la fin de démagnétisation, c'est-à-dire avant la chute de la tension V_{AUX}, on obtient une image fiable de la tension aux bornes de l'enroulement secondaire. Enfin, on voit que l'allure de la tension V_{AUX}, après la démagnétisation, n'est pas stable mais oscille. Toutefois, le niveau de la tension reste alors inférieur au niveau V_{DEM} de fin de démagnétisation.

Partant de là, l'inventeur considère que la valeur de la tension aux bornes de l'enroulement auxiliaire juste avant la fin de démagnétisation donne une image de la tension de sortie Vout. En effet, une variation du courant appelé par la charge se traduit, en pratique, par une variation de la tension de sortie que tend à compenser le circuit de régulation en modifiant la largeur des impulsions de commande, donc la quantité d'énergie à transférer au secondaire.

Ainsi, une caractéristique de la présente invention est de mesurer la tension aux bornes de l'enroulement auxiliaire uniquement pendant les périodes de démagnétisation des enroulements secondaire et auxiliaire du transformateur, au voisinage de la fin de chaque démagnétisation. Cette tension mesurée sert, selon l'invention, de base à la régulation de la modulation par largeur d'impulsions du signal de commande de l'interrupteur de découpage. En d'autres termes, l'invention prévoit d'échantillonner la tension aux bornes de l'enroulement auxiliaire pour obtenir une image de la tension de sortie.

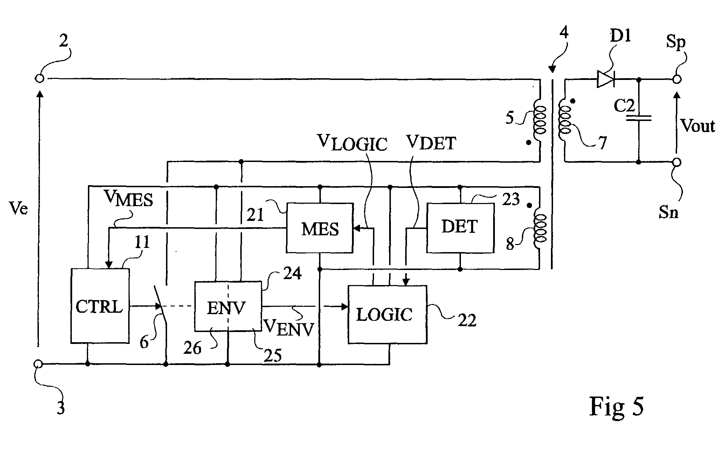

La figure 5 représente, de façon très schématique et simplifiée, un mode de réalisation d'un convertisseur de puissance selon l'invention. Comme précédemment, le convertisseur reçoit, entre des bornes 2 et 3 d'entrée, une tension redressée et filtrée Ve. La tension Ve est obtenue, par exemple, par redressement et filtrage d'une tension d'alimentation alternative, par exemple, le secteur. Toutefois, la tension Ve peut, en variante, provenir de n'importe quelle source d'alimentation, y compris une source continue.

De façon classique, un interrupteur 6 est connecté en série avec un enroulement primaire 5 d'un transformateur d'isolement 4 entre les bornes 2 et 3. L'interrupteur 6 est commandé par un circuit 11 (CTRL) de modulation de largeur d'impulsions à fréquence relativement élevée (par exemple, plusieurs dizaines de kHz). L'énergie emmagasinée dans l'enroulement 5 pendant les périodes de fermeture de l'interrupteur 6 est restituée à un enroulement secondaire 7 du transformateur 4 lorsque l'interrupteur 6 est ouvert. Les points de phase des enroulements 5 et 7 sont inversés. Côté secondaire, un condensateur de stockage C2 est prévu, après redressement (par une diode D1) de la tension aux bornes de l'enroulement 7. Ce condensateur C2 fournit une tension Vout continue régulée entre deux bornes de sortie, respectivement positive Sp et négative Sn. Le circuit 11 et l'interrupteur 6 sont, par exemple, intégrés dans un même circuit de type VIPER. Ce circuit est alimenté par une basse tension continue récupérée aux bornes d'un enroulement auxiliaire 8 du transformateur 4. L'enroulement auxiliaire 8 est en relation de phase directe avec l'enroulement secondaire 7.

Selon l'invention, on détecte les périodes de démagnétisation de l'enroulement auxiliaire 8 pour mesurer la valeur moyenne de la tension V_{AUX} à ses bornes et l'utiliser comme signal de mesure pour la régulation. La mesure de la valeur moyenne est effectuée par un circuit moyenneur 21 (MES) connecté aux bornes de l'enroulement auxiliaire 8 et fournissant un signal V_{MES} au circuit 11. La valeur mesurée V_{MES} est mémorisée jusqu'au cycle de démagnétisation suivant. Selon l'invention, le moyenneur 21 présente une constante de temps faible devant la durée d'un cycle de démagnétisation, donc devant la période des impulsions de découpage de la tension d'alimentation. Cela permet, pour les cycles de démagnétisation relativement longs, de ne pas tenir compte des oscillations de début de cycle. Cela permet également de ne retenir que la fin de démagnétisation. A la différence d'un filtrage de la tension auxiliaire (condensateur C4, figure 1 ou 3), une caractéristique de l'invention est donc d'effectuer la mesure de la valeur moyenne sur de courtes périodes devant la période de découpage. Pour les cycles de démagnétisation relativement courts (courant Iout<Imin), on préserve une mesure correcte grâce au fait que les oscillations de début de cycle de démagnétisation sont, dans ce cas, d'amplitude faible et approximativement centrées sur la tension de fin de démagnétisation (courbe 32, figure 4).

Selon l'invention, le circuit de mesure 21 n'est activé que pendant les phases de démagnétisation de l'enroulement auxiliaire 8 (donc de l'enroulement secondaire 7). Le circuit 21 reçoit un signal V_{LOGIC} d'un circuit d'activation 22 (LOGIC). Le circuit 22 a pour rôle de combiner des signaux de détection V_{DET} et V_{ENV} provenant, respectivement, d'un détecteur 23 (DET) des périodes de démagnétisation et d'un détecteur 24 (ENV) prenant en compte, entre autres, les périodes d'ouverture de l'interrupteur 6. Le détecteur 24 délivre un signal V_{ENV} représentant une fenêtre de détection autorisant la prise en compte du résultat du détecteur 23 à la double condition que l'interrupteur 6 soit ouvert et que ce résultat ne soit pas dû aux oscillations qui suivent chaque cycle de démagnétisation avant que l'interrupteur 6 se referme. On évite ainsi tout risque d'activation intempestive dans les périodes où les enroulements secondaire et auxiliaire ne peuvent pas être en démagnétisation.

Pour fournir le signal V_{ENV}, le circuit 24 comprend, par exemple, un circuit 25 de détection des périodes d'ouverture de l'interrupteur 6, connecté en parallèle sur cet interrupteur, et un circuit 26 de détection des oscillations après démagnétisation qui reçoit la tension V_{AUX}.

Pour détecter les périodes de démagnétisation, le circuit 23 détecte, de préférence, les fronts montants et descendants de la tension V_{AUX}. De tels fronts sont susceptibles d'être présents, non seulement au début de chaque cycle de démagnétisation, mais également hors des périodes de démagnétisation. Pour les perturbations de début de cycle, le choix d'un moyenneur pour mesurer la tension V_{AUX} permet de résoudre le problème. Pour les autres perturbations, on évite leur prise en compte en utilisant le signal V_{ENV} comme enveloppe à l'intérieur de laquelle on tient compte du résultat du détecteur 23. Le recours au détecteur 24 est donc lié à la solution choisie (détecteur de fronts) pour détecter les périodes de démagnétisation. Le détecteur 24 et le circuit logique 22 sont donc optionnels si une autre méthode de détection est utilisée.

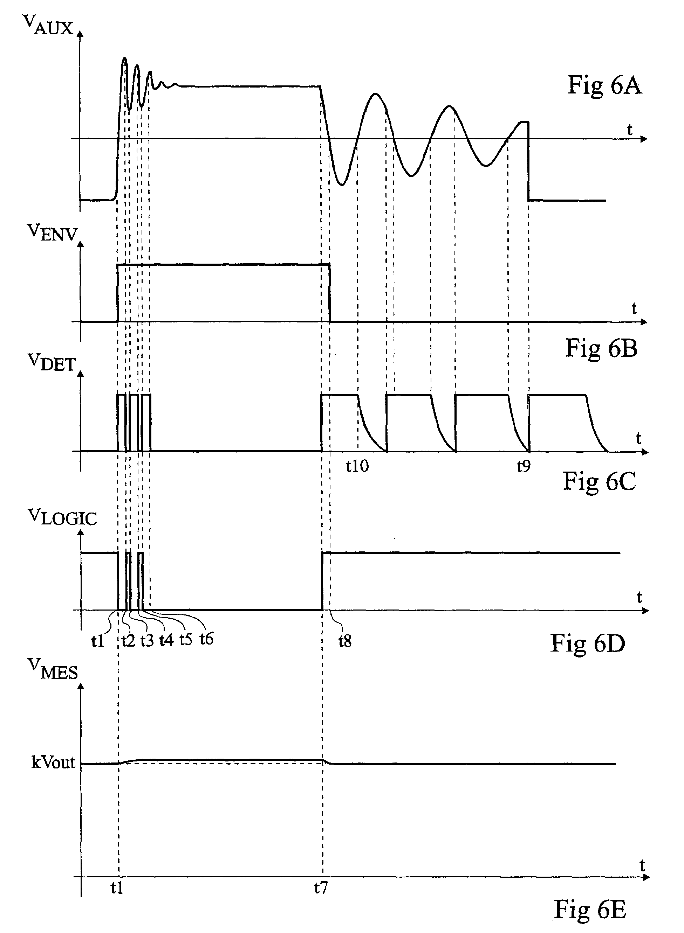

Le fonctionnement d'un convertisseur de puissance selon l'invention est illustré par les chronogrammes des figures 6A à 6E qui représentent, respectivement, un exemple d'allure des signaux V_{AUX}, V_{ENV}, V_{DET}, V_{LOGIC} et V_{MES}.

On suppose qu'à un instant t1, l'interrupteur 6 s'ouvre. La tension V_{AUX} (figure 6A) passe d'une polarité négative à positive. L'ouverture de l'interrupteur 6 est détectée par le circuit 24, activant (par exemple, à l'état haut) le signal V_{ENV} (figure 6B). Le front montant positif du signal V_{AUX} est détecté par le circuit 23 qui commute vers un état haut (figure 6C). Le front descendant suivant (instant t2) active (par exemple, à l'état bas) le signal V_{DET}. Le signal V_{LOGIC} (figure 6D) commute alors dans un état (par exemple, bas) d'activation du moyenneur 21.

Les fronts des oscillations du début de cycle de démagnétisation sont détectés par le signal V_{DET} (instants t3, t4, t5 et t6), et provoquent des commutations du signal V_{LOGIC}. Bien que le moyenneur soit successivement désactivé puis activé, le signal de mesure V_{MES} est insensible aux désactivations du début du cycle en raison de la constante de temps du moyenneur. Une fois le signal V_{AUX} stabilisé, le moyenneur reste activé jusqu'à la fin de la démagnétisation détectée par le circuit 23 (signal V_{DET}) à un instant t7.

Après l'instant t7, le signal V_{AUX} subit d'autres oscillations, centrées sur le zéro de tension, avant la fermeture de l'interrupteur 6 qui intervient à un instant t9. Ces oscillations sont détectées par le circuit 23, mais le circuit 24 en interdit la prise en compte par le circuit 22 d'activation du moyenneur 21. Pour cela, le signal V_{ENV} passe à l'état bas à la première inversion de polarité (instant t8) qui suit le début de démagnétisation, et reste dans cet état jusqu'à l'ouverture suivante de l'interrupteur 6.

En figure 6E, on voit une légère augmentation du signal V_{MES} entre les instants t1 et t7. Cette augmentation, parasite et non obligatoire, est cependant négligeable et a été illustrée pour mieux faire ressortir la période de mesure. Par conséquent, la tension kVout (proportionnelle à la tension Vout de sortie de l'enroulement secondaire) est mémorisée pendant les périodes de mesure. Le reste du temps, cette tension mémorisée reste disponible pour le circuit de commande 11. Le circuit 11 reçoit donc, en permanence, un niveau de tension (mis à jour à la fréquence de découpage) qui est fonction de la tension de sortie Vout, et qui en permet un asservissement fiable et précis.

Un avantage de la présente invention est qu'en dimensionnant convenablement le circuit moyenneur (constante de temps faible devant les durées de démagnétisation et suffisante pour moyenner les oscillations de début de cycle), quel que soit l'appel de courant par la charge, l'invention permet de maintenir la tension de sortie Vout à la valeur désirée.

Un autre avantage de la présente invention est qu'elle ne nécessite aucune mesure sur l'enroulement secondaire servant à alimenter la charge. Ainsi, on évite tout recours à des moyens de type optocoupleur ou transformateur pour véhiculer un signal de régulation entre le secondaire et le primaire.

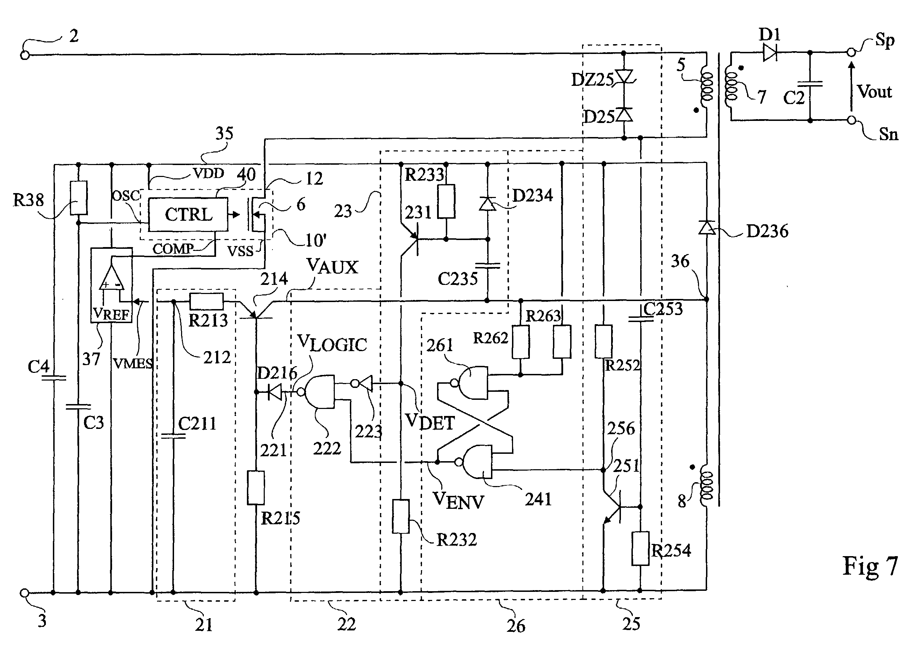

La figure 7 représente un exemple de schéma électrique détaillé d'un convertisseur de puissance selon la présente invention. Dans l'exemple de la figure 7, l'interrupteur de découpage 6 est intégré avec son circuit de commande dans un circuit 10' de type VIPER. Le circuit VIPER est ici représenté avec des bornes différentes de la représentation de la figure 1. Cette représentation fait apparaître un bloc 40 (CTRL) de commande de l'interrupteur 6. Une entrée OSC du bloc 40 reçoit une fréquence d'oscillation. Le circuit 10' est alimenté par la tension Vdd. Le bloc 40 reçoit, sur une borne COMP, une consigne de courant destinée au transistor MOS 6.

Comme précédemment, la borne 12 du circuit 10' correspondant au drain du transistor 6 est connectée au point de phase de l'enroulement primaire 5. La source du transistor 6 correspond à la borne Vss du circuit 10', reliée à la masse 3. Un condensateur C4 relie une ligne 35 d'alimentation locale (Vdd) à la borne 3. La borne OSC du circuit 10' est reliée au point milieu d'une association en série d'une résistance R38 et d'un condensateur C3, entre la ligne 35 et la masse 3.

Le circuit moyenneur 21 est constitué d'un réseau RC. Un condensateur C211 relie une borne 212 de sortie du moyenneur 21 à la masse 3. Cette borne 212 est reliée, par une résistance R213, à un interrupteur 214 commandé par le signal V_{LOGIC}. Cet interrupteur 214 est, par exemple, constitué d'un transistor bipolaire de type PNP dont l'émetteur est relié à la résistance R213 et dont le collecteur est relié au point de phase 36 de l'enroulement auxiliaire 8. La base du transistor 214 est reliée à la masse par une résistance R215 et, par une diode D216, à une borne 221 de sortie du circuit logique 22 fournissant le signal V_{LOGIC}. A titre d'exemple particulier de réalisation, on pourra choisir un condensateur C211 de 470 pf et une résistance R213 de 1 kΩ.

La sortie 212 du circuit moyenneur fournissant le signal V_{MES} est reliée à un circuit de mise en forme 37 alimenté par la tension Vdd. La sortie du circuit de mise en forme 37 est reliée à la borne COMP du circuit 10'. Le bloc 37 intègre, par exemple, un amplificateur d'erreur dont une entrée négative reçoit la tension V_{MES} et dont une entrée positive reçoit une tension de référence V_{REF}. La sortie de l'amplificateur d'erreur est reliée à la borne COMP. Quand la tension V_{MES} est supérieure à la tension de référence, la tension appliquée sur la borne COMP diminue. Il en découle une diminution de l'énergie transmise au secondaire. A l'inverse, si la tension V_{MES} est inférieure à la tension de référence, on augmente l'énergie transmise au secondaire.

Dans l'exemple de la figure 7, le signal V_{LOGIC} est fourni par une porte NON-ET 222. Une première entrée de la porte 222 reçoit le signal V_{DET} ayant traversé un inverseur 223. Une deuxième entrée de la porte 222 reçoit le signal V_{ENV}.

Quand le signal V_{ENV} est à l'état bas, c'est-à-dire que l'on se trouve hors de la fenêtre de démagnétisation autorisée, la sortie 221 de la porte 222 est forcée à l'état haut indépendamment de l'état du signal V_{DET}. Le transistor 214 est donc bloqué.

Quand le signal V_{ENV} est à l'état haut, l'état du signal V_{LOGIC} dépend de l'état du signal V_{DET}, donc du détecteur de fronts 23.

Le bloc 23 de détection de fin de démagnétisation de l'enroulement auxiliaire 8 est constitué d'un transistor bipolaire 231 de type PNP dont l'émetteur est connecté à la ligne 35 d'alimentation locale Vdd et dont le collecteur est relié, par une résistance R232, à la masse. La base du transistor 231 est reliée à la ligne 35 par une résistance R233 et au point milieu d'une association en série d'une diode D234 et d'un condensateur C235 entre la ligne 35 et le point de phase 36 de l'enroulement auxiliaire 8. L'anode de la diode D234 est reliée à la base du transistor 231 et sa cathode est reliée à la ligne 35.

Selon l'invention, le point de phase 36 ne constitue pas directement la ligne 35 de fourniture de tension positive Vdd. On prévoit une diode D236 dont l'anode est connectée au point de phase 36 et dont la cathode est reliée à la ligne 35. La tension Vdd correspond donc à la tension V_{AUX} aux bornes de l'enroulement auxiliaire, diminuée de la chute de tension dans la diode D236 (approximativement 0,6 V).

Au début d'un cycle de démagnétisation, la tension aux bornes de l'enroulement auxiliaire croît. Dès que cette tension dépasse la tension stockée dans le condensateur C4 (tension Vdd) plus 0,6 V, la diode D236 est polarisée en direct. La diode D234 ramène le potentiel de base du transistor 231 au potentiel du point 36. A chaque front de la tension V_{AUX}, le condensateur C235 se charge ou se décharge selon le sens du front. La résistance R233 et le condensateur C235 fixent la pente du signal V_{AUX} nécessaire pour provoquer une commutation, afin ne pas tenir compte des variations lentes de la tension V_{AUX}. Le transistor 231 se bloque à chaque front descendant quand la tension V_{AUX} est positive et à chaque front montant quand la tension V_{AUX} est négative (figure 6C). Le signal V_{DET} fourni par le collecteur du transistor 231 est à l'état bas quand le transistor 231 est bloqué.

Le détecteur 25 des périodes de fermeture de l'interrupteur 6 est constitué d'un transistor bipolaire NPN 251 dont l'émetteur est relié à la masse 3 et dont le collecteur est relié, par une résistance de polarisation R252, à la ligne 35. La base du transistor 251 est connectée au point milieu d'une association en série d'un condensateur C253 et d'une résistance R254 entre la borne 12 (point de phase de l'enroulement 5) et la masse 3. Le condensateur C253 sert à ne tenir compte que des fronts de commutation. A chaque ouverture de l'interrupteur 6, la base du transistor 251 se trouve polarisée positivement (par l'intermédiaire du condensateur C253 et de l'interrupteur 6). Le transistor 251 conduit et son collecteur (point 256) indique un état bas. A chaque ouverture de l'interrupteur 6, le potentiel de la borne 12 croît brusquement. Cette croissance est reportée sur la base du transistor 251 qui devient passant et tire alors le point 256 de sortie du détecteur 25 à la masse.

Le cas échéant, pour absorber l'énergie de fuite du transformateur, on prévoit une diode Zener DZ25 en série-opposition avec une diode D25 aux bornes de l'enroulement primaire 5. L'anode de la diode Zener DZ25 est connectée à la borne positive 2 d'application de la tension redressée et filtrée. L'anode de la diode D25 est connectée au point de phase de l'enroulement 5.

Le signal délivré par le circuit 25 ne suffit pas pour définir le signal V_{ENV}. En effet, à partir de l'instant t8 (figure 6D), l'interrupteur 6 restant ouvert, le point de phase de l'enroulement 5 devient négatif (la tension V_{AUX} devenant négative). Le transistor 251 reste bloqué malgré les oscillations du signal V_{AUX}. En effet, les pentes du signal V_{AUX} sont alors trop faibles pour que le condensateur C253 ait le temps de rendre passant le transistor 251 quand le signal V_{AUX} redevient positif. On tire ici profit de la différence de pente entre les pics de début de démagnétisation et les oscillations postérieures à la démagnétisation. Ce fonctionnement se poursuit jusqu'à l'instant t9 (figure 6C) où la fermeture de l'interrupteur 6 bloque définitivement le transistor 251 jusqu'au cycle de démagnétisation suivant.

Dans le mode de réalisation de la figure 7, le signal V_{ENV} est délivré par une porte NON-ET 241 dont une première entrée est reliée au point 256. La porte 241 fait partie d'une bascule RS constitutive du détecteur 26. Cette bascule comprend une deuxième porte NON-ET 261 dont une première entrée est reliée à la sortie de la porte 241 et dont la sortie est reliée à la deuxième entrée de la porte 241. Une deuxième entrée de la porte 261 est reliée, par des résistances R262 et R263, respectivement aux points 36 et 35. Les résistances R262 et R263 ont, de préférence, la même valeur. Par conséquent, la deuxième entrée de la porte 261 reçoit une tension correspondant à la moitié de la différence entre la tension Vdd et la tension V_{AUX}.

Quand la tension V_{AUX} devient négative à l'instant t8, la diode D236 est bloquée et la tension appliquée sur la deuxième entrée de la porte 261 est inférieure au seuil de cette porte 261 qui correspond approximativement à la moitié de la tension Vdd. En effet, les portes sont alimentées par la tension Vdd fournie par le condensateur C237. Comme la tension V_{AUX} est négative, le niveau reçu par la porte 261 est forcément inférieur à Vdd/2. La sortie de la porte 261 est donc forcée à l'état haut, d'où il résulte que la porte 241 fournit un signal à l'état bas (sa première entrée étant à l'état haut par le blocage du transistor 251).

Quand la tension V_{AUX} redevient positive (instant t10, figure 6A), la première entrée de la porte 241 reste à l'état haut comme cela a été indiqué ci-dessus. De plus, le niveau appliqué sur la deuxième entrée de la porte 261 reste inférieur au seuil de cette porte. Par conséquent, la sortie de la porte 261 reste à l'état haut, d'où il résulte que le signal V_{ENV} reste à l'état bas. Il faut attendre la prochaine ouverture de l'interrupteur 6 pour que le signal V_{ENV} change d'état.

Bien entendu, la présente invention est susceptible de diverses variantes et modifications qui apparaîtront à l'homme de l'art. En particulier, les valeurs à choisir pour les différents composants constitutifs du convertisseur de puissance sont à la portée de l'homme du métier en fonction de l'application et à partir des indications fonctionnelles données ci-dessus. De plus, l'adaptation du convertisseur de puissance à des signaux de détection inversés ou à d'autres signaux de détection que ceux décrits ci-dessus est également à la portée de l'homme du métier. En outre, d'autres circuits, intégrés ou non, équivalents au circuit VIPER pourront être utilisés. Par exemple, le circuit VIPER pourra être remplacé par un circuit de génération et de modulation de largeur d'impulsions (par exemple, un circuit intégré commercialisé par la société STMicroelectronics sous la dénomination UCC3824) associé à un interrupteur séparé (par exemple, un transistor MOS à canal N dont la grille est reliée à une sortie du circuit intégré par une résistance).

## Revendications

1. Convertisseur de tension comprenant un circuit de commande (10') d'un interrupteur (6) de fourniture de courant à un enroulement primaire (5) d'un transformateur (4) à points de phase inversés, dont un enroulement secondaire (7) est associé à un condensateur (C2) de fourniture d'une tension continue de sortie régulée (Vout) et dont un enroulement auxiliaire (8) fournit une tension d'alimentation du circuit de commande, **caractérisé en ce qu'**il comporte des moyens (21) pour mesurer la valeur moyenne de la tension (V_{AUX}) aux bornes de l'enroulement auxiliaire au voisinage de la fin de ses périodes de démagnétisation.

2. Convertisseur selon la revendication 1, **caractérisé en ce que** les moyens de mesure (21) sont constitués d'un réseau résistif et capacitif (R213, C211) formant un moyenneur dont la constante de temps est faible devant la période d'impulsions de commande de l'interrupteur (6).

3. Convertisseur selon la revendication 1 ou 2, **caractérisé en ce que** lesdits moyens de mesure (21) ne reçoivent la tension (V_{AUX}) de l'enroulement auxiliaire (8) que pendant les périodes de démagnétisation de l'enroulement secondaire (7).

4. Convertisseur selon la revendication 3, **caractérisé en ce qu'**il comporte des moyens (23, 24) de détection des périodes de démagnétisation de l'enroulement auxiliaire (8).

5. Convertisseur selon la revendication 4, **caractérisé en ce que** lesdits moyens de détection comportent :
un premier circuit (23) délivrant un signal à deux états de détection des fronts de la tension (V_{AUX}) aux bornes de l'enroulement auxiliaire (8) ; et
un deuxième circuit (24) de définition d'une fenêtre (V_{ENV}) de prise en compte du résultat de détection du premier circuit.

6. Convertisseur selon la revendication 5, **caractérisé en ce que** ladite fenêtre (V_{ENV}) débute par l'ouverture dudit interrupteur (6) et se termine par la première annulation qui suit de la tension (V_{AUX}) aux bornes de l'enroulement auxiliaire (8).

7. Convertisseur selon l'une quelconque des revendications 1 à 6, **caractérisé en ce que** la tension moyenne aux bornes de l'enroulement auxiliaire (8) est utilisée pour asservir la largeur des impulsions de fermeture de l'interrupteur (6).

8. Convertisseur de puissance selon l'une quelconque des revendications 1 à 7, **caractérisé en ce que** l'interrupteur (6) et son circuit de commande sont intégrés dans un même circuit (10').
